Europäisches Patentamt

(19) European Patent Office

Office européen des brevets

(11) Numéro de publication: **0 099 279**
**B1**

(12) **FASCICULE DE BREVET EUROPEEN**

(45) Date de publication du fascicule du brevet:
26.02.86

(21) Numéro de dépôt: **83401180.1**

(22) Date de dépôt: **09.06.83**

(51) Int. Cl.⁴: **B 65 G 37/02**

(54) **Chaîne de transfert libre de pièces entre des postes de travail successifs avec moyen de stockage dynamique.**

(30) Priorité: **09.06.82 FR 8210052**

(43) Date de publication de la demande:
**25.01.84 Bulletin 84/4**

(45) Mention de la délivrance du brevet:
**26.02.86 Bulletin 86/9**

(84) Etats contractants désignés:
**CH DE IT LI**

(56) Documents cités:
**GB - A - 1 099 311**

**MASS PRODUCTION, vol. 33, septembre 1957, pages
111-114, Sawell Publications Ltd., London, GB.
"Mechanical handling in paint storage and dispatch"
AUTOMATION AND REMOTE CONTROL, vol. 29, no. 1,
janvier 1968, pages 129-135, Consultants Bureau, New
York, USA S.A. YUDITSKII: "Cyclic automata and
complexes of cyclic automata"**

(73) Titulaire: **LA TELEMECANIQUE ELECTRIQUE, 33 bis,
avenue du Maréchal Joffre, F-92000 Nanterre (FR)**

(72) Inventeur: **Chevallier, Claude, 1, Avenue de Verdun
Résidence Renoir, F-92390 Villeneuve la Garenne (FR)**

(74) Mandataire: **Chevallier, Robert Marie Georges, Cabinet
BOETTCHER 23, rue La Boétie, F-75008 Paris (FR)**

## Description

L'invention a pour objet une chaîne dont le rôle est de transférer des porte-pièces entre des postes de travail successifs où sont accomplies des opérations déterminées, soit manuellement, soit automatiquement.

On emploie ici le mot chaîne pour désigner tout convoyeur ou tout transporteur qui est d'un type quelconque approprié aux pièces à déplacer et aux postes de travail. Une telle chaîne présente, en général, des surfaces porteuses distinctes sur lesquelles sont posés les porte-pièces à transférer. Dans ce qui suit, pour la commodité de l'exposé, on appellera palettes les porte-pièces qui possèdent une face supérieure spécialement destinées à recevoir les pièces à déplacer.

A une première extrémité de la chaîne de transfert il existe un poste de chargement où des pièces ayant un état initial sont disposées sur les palettes; à une seconde extrémité de la chaîne de transfert il existe un poste de déchargement où les pièces traitées se trouvant à un état final, sont retirées des palettes.

Entre ces deux extrémités sont installés plusieurs postes de travail dont le nombre exact n'est pas imposé par l'invention mais qui est souvent compris entre 5 et 20. Les pièces sont donc déplacées de l'amont (où est le poste de chargement) vers l'aval (où est le poste de déchargement).

En général, la chaîne de transfert est refermée en boucle sur elle-même grâce à un tronçon de retour qui revient de la seconde à la première extrémité, du poste de déchargement au poste de chargement.

Si l'on exclut les pannes du convoyeur lui-même, une chaîne de transfert ainsi établie est sujette à deux genres de perturbations, soit un incident de durée courte qui affecte l'un des postes, soit une panne de longue durée de l'un des postes.

On sait que les différents postes de travail ne sont pas affectés d'un même coefficient de probabilité d'incident ou de panne. En fonction de la difficulté ou de la minutie de l'opération qui s'exécute à un poste le risque d'incident ou de panne est plus ou moins grand.

Afin que l'ensemble des postes de travail ne soient pas arrêtés dès qu'un incident ou une panne se produit à un seul poste, il a été courant, jusqu'à présent, de prévoir entre les postes des zones de stockage où sont accumulées plusieurs pièces destinées au premier poste situé en aval. On appellera plus loin stock individuel interpostes les pièces ainsi accumulées en amont de chaque poste. Il est évident que chaque stock individuel interpostes ne peut avoir qu'une importance limitée sinon la chaîne de transfert occuperait une surface ou un volume considérables.

L'invention a pour but principal d'apporter une solution qui, sans exiger une surface ou un volume importants, permette d'obtenir, au moins en relation avec les postes de travail les plus exposés aux incidents et aux pannes, une quantité de pièces accumulées assez élevée pour assurer un fonctionnement prolongé de la chaîne en cas d'incident ou de panne à un poste de travail.

Dans le document MASS PRODUCTION, Vol. 33, Septembre 1957, il est décrit, aux pages 113—114, en référence à la figure 4, un système de déplacement sur un transporteur de boîtes de peinture qui ont à être classées dans un ordre déterminé pour leur expédition, et emballées, sur plusieurs étages d'un bâtiment, conformément à des ordres d'expédition. Quand les boîtes qui correspondent à une commande ont été réunies, sur le transporteur, elles sont tenues en attente, avant de passer à l'emballage, sur des boucles de stockage en circulation en circuit fermé. Autrement dit le transporteur qui a des branches à chaque étage, comprend aussi, à l'étage le plus élevé, une ou plusieurs boucles de stockage dynamique qui sont communes à l'ensemble du système.

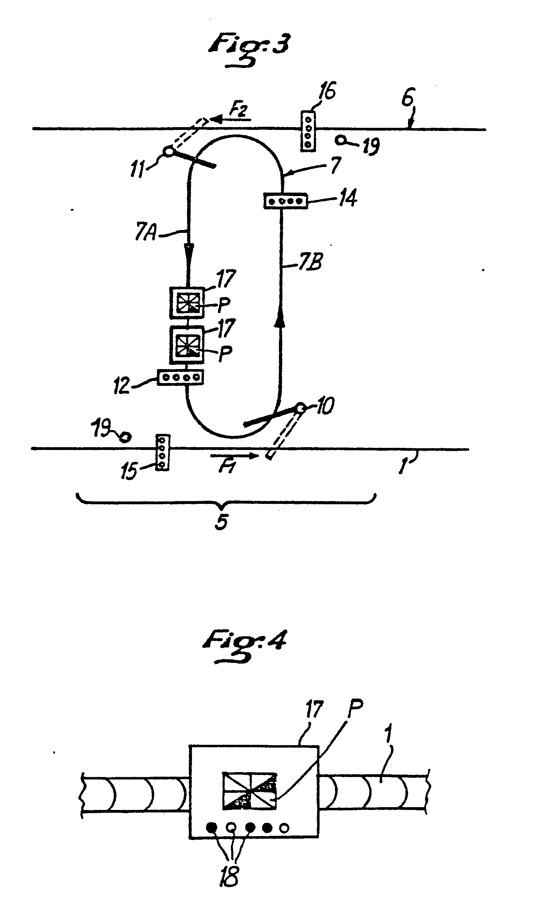

Dans le document AUTOMATION AND REMOTE CONTROL, Vol. 29. n° 1, Janvier 1968, dans un article intitulé "Cyclic automata and complexes of cyclic automata", page 134, en référence à la figure 6, il est décrit un transporteur qui alimente des postes de travail; en amont de chacun de ces derniers est prévu un accumulateur sur lequel quelques pièces attendent leur tour afin que le poste de travail soit alimenté sans interruption. Auparavant, les pièces se trouvent sur un accumulateur circulant qui leur est commun.

Dans le document GB—A—1 099 311, il est décrit un convoyeur pour déplacement d'articles de toutes natures dans lequel il existe des lignes disposées en parallèle; il est prévu que certaines au moins de ces lignes peuvent servir de boucles de stockage en circulation continue.

Aucun de ces documents ne se rapporte à une chaîne de transfert circulant en boucle entre des postes de travail et à laquelle est adjointe une boucle de stockage dynamique commun, avec la possibilité d'alimenter les postes de travail aussi bien à partir de la chaîne de transfert que de la boucle de stockage dynamique commun.

Avec une chaîne de transfert qui est de préférence mais non nécessairement en boucle fermée, comprenant un poste de chargement, des postes de travail espacés, un poste de déchargement, des palettes porte-pièces déplacées entre ces postes, à laquelle est adjointe une chaîne de stockage dynamique commun à tous les postes de travail, disposée en boucle fermée, selon l'invention des chaînes secondaires d'accès sont installées entre la chaîne de stockage dynamique commun et certains au moins des intervalles séparant les postes de travail de la chaîne de transfert. Des aiguillages sont prévus pour faire passer quant c'est nécessaire des palettes de la chaîne de transfert à la chaîne de stockage dynamique commun et inversement, au moyen des chaînes secondaires d'accès.

De préférence, chaque chaîne secondaire d'accès est elle-même une boucle fermée qui communique par deux aiguillages espacés d'une part avec la chaîne de transfert, d'autre part avec la chaîne de stockage dynamique commun.

L'invention n'interdit pas l'existence de stocks individuels interpostes. Il est particulièrement avantageux, à cet égard, d'utiliser en guise de zone de stockage destinée à des stocks individuels interpostes, une partie de chaque chaîne secondaire d'accès réservée au passage entre la chaîne de stockage dynamique et la chaîne de transfert.

Dans un mode de réalisation préféré de l'invention il est prévu, sur la chaîne de stockage dynamique un moyen sélectif d'arrêt des palettes circulantes en amont de l'aiguillage de cette chaîne avec chaque chaîne secondaire d'accès; il est prévu, aussi, sur la chaîne de transfert un espacement pour le stockage de quelques palettes entre certains au moins des postes de travail et l'aiguillage de cette chaîne de transfert avec la chaîne secondaire s'accès qui précède le poste de travail considéré.

De préférence encore, la chaîne de transfert, la chaîne de stockage dynamique commun et les chaînes secondaire d'accès sont disposées dans un même plan; la chaîne de transfert est refermée en boucle et contient la chaîne de stockage commun elle-même refermée en boucle de sorte que cette dernière chaîne est parallèle dans son ensemble au tronçon de retour de la chaîne de transfert.

Des aiguillages dont prévus entre la chaîne de transfert et la chaîne de stockage dynamique commun, au début et à la fin du tronçon de retour de la chaîne de transfert.

On donnera maintenant, dans intention limitative, sans exclure aucun autre mode de réalisation, une description d'un exemple d'un mode préféré de réalisation de l'invention. On se reportera aux dessins annexés dans lesquels:

la figure 1 est une vue de dessus schématique montrant la structure d'une chaîne de transfert libre de pièces entre postes de travail successifs avec un moyen de stockage commun selon l'invention,

la figure 2 est une vue analogue à la figure 1 montrant de façon moins schématique et avec quelques variantes de détail, la même chaîne de transfert,

la figure 3 est une vue partielle de dessus montrant avec plus de détails une chaîne secondaire d'accès,

la figure 4 est une vue de dessus schématique d'une palette porte-pièces avec des moyens d'indexation.

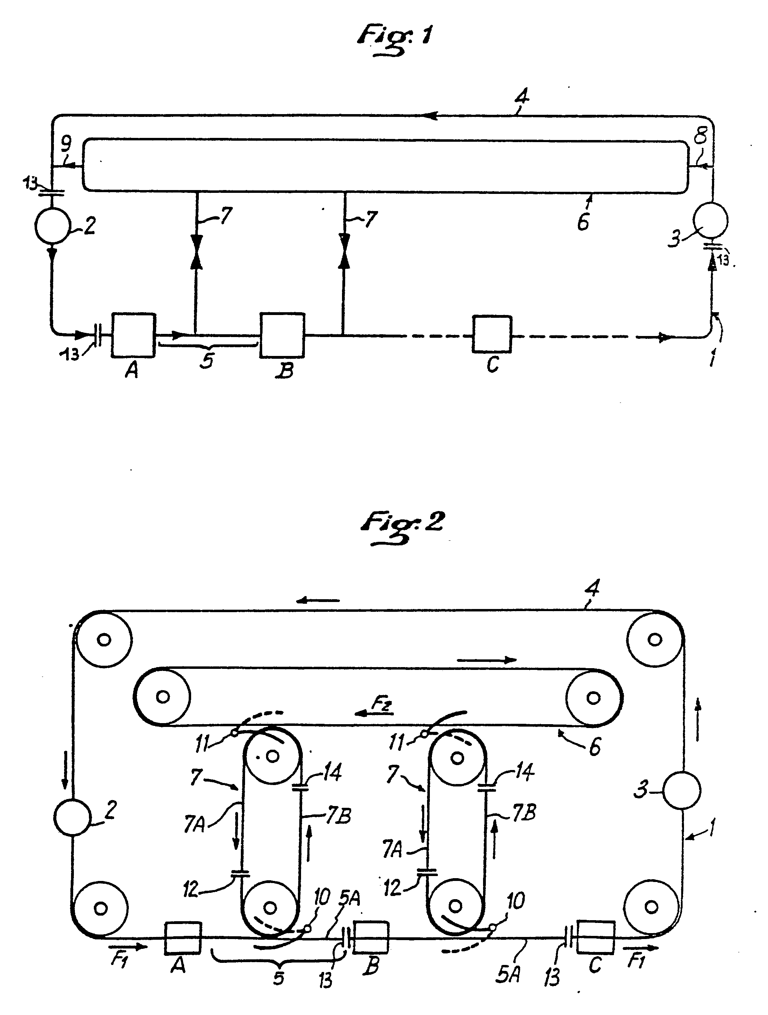

La figure 1 montre une chaîne de transfert 1 qui est réalisée en boucle fermée sur elle-même pour déplacer des palettes porte-pièces, en circuit fermé, en passant par un poste de chargement 2 où des pièces sont posées, ou calées, ou attachées sur les palettes, puis par des postes de travail successifs espacés A, B, C, où les pièces subissent une ou plusieurs opérations, pour arriver à un poste de déchargement 3 où les pièces sont retirées des palettes. Le poste de chargement 2 est considéré comme l'extrémité amont ou première extrémité de la chaîne de transfert 1 et le poste de déchargement 3 en est l'extrémité aval ou seconde extrémité. En fait, en tournant toujours dans le même sens, la chaîne de transfert se poursuit par un tronçon de retour 4 entre le poste de déchargement 3 et le poste de chargement 2. Dans ce tronçon de retour 4 les palettes sont généralement dépourvues de pièces.

Dans la chaîne de transfert 1, les postes de travail successifs A, B, C . . . sont séparés par des intervalles 5 relativement courts. Une chaîne de stockage dynamique commun 6 est adjointe à la chaîne de transfert 1 et des chaînes secondaires 7 d'acccès entre la chaîne de stockage dynamique 6 et la chaîne de transfert 1. Comme on le montrera plus loin, il est souvent préférable mais pas toujours nécessaire de prévoir une chaîne secondaire d'accès 7 à chaque intervalle 5 entre postes de travail. Il est possible aussi, mais on peut s'en dispenser dans de nombreux cas, de prévoir aussi une chaîne de sortie 8 après le poste de déchargement 3 entre la chaîne de transfert 1 et la chaîne de stockage dynamique 6, et une chaîne d'entrée 9, avant le poste de chargement 2 entre la chaîne de stockage dynamique 6 et la chaîne de transfert 1.

L'agencement général décrit ci-dessus n'impose pas que les diverses chaînes 1, 6, 7, 8, 9 se trouvent au même niveau, ni qu'elles soient toujours à un niveau constant. Des niveaux différents et des changements de niveaux sont compatibles avec la structure de l'invention. Cette dernière s'accommode également de toute type de transporteur constituant les chaînes et adapté aux porte-pièces à déplacer. On ne décrira donc pas les éléments constitutifs des chaînes qui peuvent être d'un type classique quelconque approprié.

Il est plus simple et préférable de disposer toutes les chaînes à un même niveau et d'adopter diverses dispositions de détail illustrées par la figure 2.

Alors que des changements de niveaux permettent de placer la chaîne de stockage dynamique commun 6 à une emplacement quelconque par rapport à la chaîne de transfert 1, avec l'installation de toutes les chaînes à un même niveau, il est préférable d'adopter une chaîne de stockage dynamique commun 6 réalisée en boucle fermée sur elle-même et de la placer à l'intérieur de la boucle de la chaîne de transfert 1 parallèlement au tronçon de retour 4 susceptible d'être mis à proximité de ce tronçon de retour 4. Il est préférable aussi de donner aux chaînes secondaires d'accès 7 une configuration en boucle fermée, cette boucle s'étendant entre un aiguillage 10 prévu dans un intervalle 5 entre deux postes de travail et un aiguillage 11 prévu juste en regard sur la chaîne de stockage 6. Les chaînes de sortie 8 et d'entrée 9 ne sont plus nécessaires.

A chaque aiguillage 10, 11 est monté un élément d'aiguillage approprié au transporteur utilisé et capable soit de laisser passer une palette sur la chaîne de transfert 1 ou sur la chaîne de stockage 6 dans la dévier de son chemin, soit de dévier une palette de la chaîne de transfert 1 à la chaîne secondaire 7 ou inversement de celle-ci à celle-là, soit de dévier une palette de la chaîne de stockage 6 à la chaîne secondaire 7 ou inversement de celle-ci à celle-là. Dans ce cas, lorsque le tronçon actif de la chaîne de transfert 1 se déplace entre les postes de travail A, B ... dans le sens indiqué par une flèche $F_1$, il est préférable que le tronçon de la chaîne de stockage 6 où se trouvent les aiguillages 11 se déplace en sens opposé indiqué par une flèche $F_2$.

Une chaîne de transfert 1 combinée à une chaîne de stockage commun 6 comme on vient de le décrire, apporte les avantages suivants.

Les palettes se déplacent dans le sens $F_1$ entre les postes 2, A, B, C ... 3 à leur propre cadence. La chaîne de transfert se déplace de façon continue dans le sens $F_1$; lors d'une fabrication sans incidents les palettes se déplacent entre les différents postes à la même vitesse que celle-ci mais peuvent être immobilisées un certain temps en regard de chaque poste, (pour que l'opération correspondante soit effectuée), sans que pour autant la chaîne soit immobilisée. Des moyens appropriés effectuent dans ce cas soit un soulèvement, soit un déplacement latéral de la palette par rapport à la chaîne, soit un maintien ou une immobilisation de la palette pour que celle-ci puisse glisser sur la chaîne en mouvement.

S'il arrive un incident même assez long sur un des postes appelé ici poste L, les autres postes continuent à fonctionner puisque des palettes destinées au poste suivant L + 1 sont prélevées une à une sur la chaîne de stockage 6 selon leur disponibilité et les pièces sortant du poste précédent L − 1 sont introduites une à une sur la chaîne de stockage 6. Il faut un incident prolongé ou une panne au poste L pour que tous les postes s'arrêtent lorsque la chaîne de stockage 6 est vide de pièces destinées aux postes en aval remplacées par celles venant du poste L − 1. Même dans cette situation les postes peuvent fonctionner jusqu'au poste L − 1, les pièces sortant de celui-ci étant alors introduites sur la chaîne de stockage 6.

Si un incident ou une panne arrive à un poste situé en amont du poste le plus lent L, toute la partie de la chaîne 1 située en aval de ce poste peut continuer à être alimentée à partir de la chaîne de stockage 6. Dès que l'incident est terminé, les postes de travail situés en amont du poste le plus lent L peuvent être remis en marche à leur propre vitesse; les pièces que ne peut absorber le poste L sont alors dirigées sur la chaîne de stockage 6 jusqu'à ce que celle-ci soit remplie.

De même, si un incident survient à un poste situé en aval du poste le plus lent L, toute la partie de la chaîne 1 se trouvant en amont de ce poste peut continuer à fonctionner, les pièces produites étant introduites sur la chaîne de stockage 6. Dès que l'incident est terminé, les postes de travail situés en aval du poste le plus lent L peuvent être remis en marche à leur propre vitesse la plus élevée jusqu'à ce que l'excédent de pièces

stockées sur la chaîne de stockage 6 soit résorbé.

Ce qui précède n'est qu'un exemple de la manière dont on peut exploiter une chaîne de transfert conforme à l'invention. On peut améliorer encore la structure décrite plus haut afin de pouvoir en faire une exploitation plus avantageuse.

Sur chaque chaîne secondaire d'accès 7 réalisée selon l'exemple de la figure 2, on distingue une branche 7A allant de la chaîne de stockage 6 à la chaîne de transfert 1 et une branche 7B allant en sens inverse.

Une barrière d'arrêt 12 est montée sur la branche 7A, à proximité de la chaîne de transfert 1. Pendant la marche normale de l'installation, les chaînes secondaires d'arrêt 7 sont en mouvement. La partie de la branche 7A entre l'aiguillage 11 et la barrière 12 est garnie de pièces destinées au poste de travail immédiatement suivant. De même, entre l'aiguillage 10 de chaque chaîne secondaire d'accès 7 avec la chaîne de transfert 1, on distingue un tronçon 5A de chaque intervalle 5 sur lequel on peut accumuler en amont d'une barrière 13 des pièces destinées au poste de travail que suit. On dispose donc d'un stock interpostes qui peut être placé soit sur la branche 7A, soit sur le tronçon 5A. Cette disposition n'empêche pas l'envoi sur la chaîne de stockage dynamique commun 6 des pièces du poste précédent au moyen de l'aiguillage 10 et de la branche 7B.

En plus des organes de structure qui ont été décrits jusqu'à présent, les chaînes 1, 6, 7 comprennent des moyens nécessaires à un fonctionnement correct en vue du transfert des palettes chargées de pièces de l'une à l'autre de ces chaînes. La figure 3 montre qu'en plus des barrières d'arrêt 12 et 14 montées sur les branches 7A et 7B des chaînes d'accès 7, il est prévu une barrière 15 sur la chaîne de transfert 1, en amont dans le sens $F_1$ de l'aiguillage 10 et une barrière 16 sur la chaîne de stockage 6 en amont dans le sens $F_2$ de l'aiguillage 11. Ces barrières 15, 16 sont commandées en liaison avec les aiguillages 10, 11 selon que l'on veut laisser passer les palettes sur une chaîne 6 ou 1, ou faire un transfert de palettes au moyen de la chaîne secondaire d'accès 7.

Le mouvement des palettes, le contrôle de leurs déplacements et la connaissance de leurs positions découlent de l'emploi de moyens d'identification et de moyens de lecture. Chaque palette 17 (figure 4) est munie d'un moyen d'identification, par exemple magnétique, qui permet de la reconnaître. Selon l'invention, ce moyen d'identification représente l'état de la pièce P portée par cette palette, par exemple la désignation du poste de travail où cette pièce devra subir sa prochaine opération ou celle du poste de déchargement. Les moyens d'identification sont modifiés chaque fois qu'une palette 17 sort d'un poste de travail où la pièce P a subi une opération.

Des moyens de lecture 19 sont placés le long des chaînes 1, 6 aux endroits convenables, de préférence à proximité des barrières 15, 16 (figure 3) pour que s'effectue l'aiguillage d'une palette portée par la chaîne 6 vers la chaîne 1, ou inversement.

Il n'est pas nécessaire que les pièces P portées par les palettes 17 subissent toutes une opération aux postes de travail successifs A, B...

Une palette peut tranverser une poste de travail sans s'y arrêter, en étant déplacée par la chaîne de transfert 1; elle peut aussi à sa sortie d'un poste de travail être prise par la chaîne secondaire d'accès 7 qui suit ce poste et être envoyée sur la chaîne de stockage dynamique commun 6 pour être renvoyée plus loin de cette chaîne 6 à un autre poste de travail situé sur la chaîne de transfert 1.

La chaîne de stockage dynamique commun donne une grande souplesse au fonctionnement de l'ensemble et une plus grande durée d'autonomie en cas d'incident ou de panne que des petits stocks individuels interpostes seuls. Toutefois, l'invention n'exclut pas comme on l'a montré l'usage et les avantages de ces derniers qui sont susceptibles d'être combinés avec la chaîne de stockage, dynamique commun.

Pour certaines applications, où l'encombrement et/ou le prix de revient devraient être réduits, la chaîne d'accès 7 peut être remplacée par un porte-palette qui se déplace alternativement entre les chaînes 1 et 6; dans ce cas, des moyens de surveillance évidents pour l'homme de l'art sont associés aux moyens de détection des incidents ou des pannes pour effectuer le transfert des palettes avec la priorité et dans le sens convenables (voir figure 1).

**Revendications**

1. Chaîne de transfert entre un poste de chargement (2), des postes de travail (A, B, C), un poste de déchargement (3), séparés par des intervalles (5), pour déplacer entre ces postes des palettes (17) portant des pièces (P), à laquelle est adjointe une chaîne de stockage dynamique commun (6) disposée en boucle fermée, caractérisée en ce que des chaînes secondaires d'accès (7) sont installées à certains au moins des intervalles (5) entre ladite chaîne de transfert (1) et ladite chaîne de stockage dynamique commun (6) avec des aiguillages (10, 11) appropriés pour faire passer des palettes (17) d'une chaîne à l'autre.

2. Chaîne de transfert selon la revendication 1, disposée en boucle fermée avec un tronçon de retour (4) entre le poste de déchargement (3) et le poste de chargement (2), caractérisée en ce que la chaîne de stockage dynamique commun (6) est disposée parallèlement au tronçon de retour (4).

3. Chaîne de transfert selon la revendication 1, caractérisée en ce que chaque chaîne secondaire d'accès (7) est elle-même disposée en boucle fermée entre la chaîne de transfert (1) et la chaîne de stockage (6) avec une branche (7A) et une branche (7B), le sens de circulation ($F_1$) sur la chaîne de transfert (1) étant opposé au sens de circulation ($F_2$) sur la chaîne de stockage (6).

4. Chaîne de transfert selon la revendication 1, caractérisée en ce que chaque chaîne secondaire d'accès (7) est du type à deux sens opposés possibles de déplacement de palettes entre la chaîne de transfert (1) et la chaîne de stockage dynamique commun (6) et elle comprend des moyens de surveillance associés à des moyens de détection d'incidents ou de pannes.

5. Chaîne de transfert selon la revendication 2, caractérisée en ce que la chaîne de stockage dynamique commun (6) est disposée à l'intérieur de la chaîne de transfert (1).

6. Chaîne de transfert selon la revendication 3, caractérisée en ce qu'une barrière (12) est prévu sur la branche (7A) de chaque chaîne secondaire d'accès (7) avant l'aiguillage (10) de passage sur la chaîne de transfert (1) pour que cette branche serve de stockage individuel interpostes.

7. Chaîne de transfert selon la revendication 3, caractérisée en ce qu'une barrière (14) est prévue sur la branche (7B) de chaque chaîne secondaire d'accès (7) avant l'aiguillage (11) de passage sur la chaîne de stockage (6).

8. Chaîne de transfert selon la revendication 1, caractérisée en ce que des barrières (13) sont prévues en amont de certains au moins des postes de travail afin que le tronçon (5A) de l'intervalle (5) entre postes compris entre l'aiguillage (10) de passage sur la chaîne de transfert (1) et le premier poste de travail qui suit serve de stockage individuel interpostes.

9. Chaîne de transfert selon la revendication 1, caractérisée en ce que des moyens d'identification sont portés par chaque palette (8) et indiquent à chaque instant le prochain poste de travail où cette palette devra s'arrêter.

10. Chaîne de transfert selon l'une quelconque des revendications 1, 2, caractérisée en ce qu'une chaîne de sortie (8) et une chaîne d'entrée (9) sont disposées entre d'une part la chaîne de transfert (1) respectivement en aval du poste de déchargement (3) et en amont du poste de chargement (2) et, d'autre part, la chaîne de stockage dynamique commun (6).

**Patentansprüche**

1. Transferkette zwischen einer Beladestation (2), Bearbeitungsstationen (A, B, C) und einer Abgabestation (3), die durch Zwischenbereiche (5) voneinander getrennt sind, zur Verschiebung von Werkstücke (P) führenden Paletten (17) zwischen diesen Stationen, wobei der Transferkette eine gemeinsame Förderkette (6) zur dynamischen Speicherung zugeordnet ist, die als geschlossene Schleife ausgebildet ist, dadurch gekennzeichnet, dass sekundäre Zufördererketten (7) zumindest an bestimmten Zwischenbereichen (5) zwischen der Transferkette und der gemeinsamen Förderkette (6) zur dynamischen Speicherung angeordnet sind und geeignete Verteiler (10, 11) vorgesehen sind, die den Übertritt der Paletten (17) von einer Kette zur anderen gestatten.

2. Transferkette nach Anspruch 1, die als geschlossene Schleife mit einem Rückführabschnitt (4) zwischen der Abgabestation (3) und der Beladestation (2) ausgebildet ist, dadurch gekennzeichnet, dass die gemeinsame Förderkette (6) zur dynamischen Speicherung parallel zum Rückführabschnitt (4) angeordnet ist.

3. Transferkette nach Anspruch 1, dadurch gekennzeichnet, dass jede sekundäre Zufördererkette (7) ihrerseits in einer geschlossenen Schleife zwischen der Transferkette (1) und der Förderkette zur Speicherung (6) angeordnet ist und einen Abschnitt (7A) sowie einen Abschnitt (7B) aufweist, und dass die Umlaufrichtung ($F_1$) der Transferkette (1) entgegengesetzt zur Umlaufrichtung ($F_2$) der Förderkette zur Speicherung (6) ist.

4. Transferkette nach Anspruch 1, dadurch gekennzeichnet, dass jede sekundäre Zufördererkette (7) als Förderertyp mit zwei möglichen entgegengesetzten Förderrichtungen für die Paletten zwischen der Transferkette (1) und der gemeinsamen Förderkette (6) zur dynamischen Speicherung ausgebildet ist und Überwachungseinrichtungen aufweist, die Störungssensoreinrichtungen zugeordnet sind.

5. Transferkette nach Anspruch 2, dadurch gekennzeichnet, dass die gemeinsame Förderkette (6) zur dynamischen Speicherung im Inneren der Transferkette (1) angeordnet ist.

6. Transferkette nach Anspruch 3, dadurch gekennzeichnet, dass eine Sperre (12) auf dem Abschnitt (7A) jeder sekundären Zufördererkette (7) vor dem Verteiler (10) zum Übertritt auf die Transferkette (1) vorgesehen ist, damit dieser Abschnitt zur zwischengeschalteten individuellen Speicherung dient.

7. Transferkette nach Anspruch 3, dadurch gekennzeichnet, dass eine Sperre (14) auf dem Abschnitt (7B) jeder sekundären Zufördererkette (7) vor dem Verteiler (11) zum Übertritt auf die Förderkette (6) zur Speicherung vorgesehen ist.

8. Transferkette nach Anspruch 1, dadurch gekennzeichnet, dass Sperren (13), gesehen in Förderrichtung, vor zumindest bestimmten Bearbeitungsstationen angeordnet sind, damit das Teilstück (5A) des Zwischenbereichs (5) zwischen den Stationen, welches zwischen dem Verteiler (10) für den Übergang auf die Transferkette (1) und der ersten darauffolgenden Bearbeitungsstation liegt, zur individuellen dazwischengeschalteten Speicherung dient.

9. Transferkette nach Anspruch 1, dadurch gekennzeichnet, dass jede Palette (8) Kennzeichnungseinrichtungen trägt, die jederzeit die nächste Bearbeitungsstation angeben, wo die Palette anhalten muss.

10. Transferkette nach einem der Anspruch 1 oder 2, dadurch gekennzeichnet, dass eine ausgangsseitige Förderkette (8) und eine eingangsseitige Förderkette (9) zwischen der Transferkette (1) einerseits und der gemeinsamen Förderkette (6) zur dynamischen Speicherung andererseits angeordnet sind, wobei die Förderkette (8) in Förderrichtung gesehen hinter der Abgabestation (3) und die Förderkette (9) in Förderrichtung gesehen, vor der Beladestation (2) liegt.

## Claims

1. A transfer chain between a loading station (2), work stations (A, B, C) and an unloading station (3) separated by intervals (5), for moving between these stations pallets (17) carrying workpieces (P), there being associated with it a common dynamic storage chain (6) arranged in a closed loop, characterized in that secondary access chains (7) are installed at at least certain of the intervals (5) between the said transfer chain (1) and the said common dynamic storage chain (6) with points (10, 11) suitable for making the pallets (17) cross over from one chain to the other.

2. A transfer chain as in Claim 1, arranged in a closed loop with a return portion (4) between the unloading station (3) and the loading station (2), characterized in that the common dynamic storage chain (6) is arranged in parallel with the return portion (14).

3. A transfer chain as in Claim 1, characterized in that each secondary access chain (7) is in turn arranged in a closed loop between the transfer chain (1) and the storage chain (6) with one arm (7A) and one arm (7B), the direction of circulation ($F_1$) along the transfer chain (1) being opposite to the direction of circulation ($F_2$) along the storage chain (6).

4. A transfer chain as in Claim 1, characterized in that each secondary access chain (7) is of the type having two opposite directions of movement of pallets possible between the transfer chain (1) and the common dynamic storage chain (6) and it comprises supervisory means associated with means of detection of incidents or breakdowns.

5. A transfer chain as in Claim 2, characterized in that the common dynamic storage chain (6) is arranged inside the transfer chain (1).

6. A transfer chain as in Claim 3, characterized in that a barrier (12) is provided on the arm (7A) of each secondary access chain (7) before the points (10) for crossing over onto the transfer chain (1), in order that this arm may serve for individual between-stations storage.

7. A transfer chain as in Claim 3, characterized in that a barrier (14) is provided on the arm (7B) of each secondary access chain (7) before the points (11) for crossing over onto the storage chain (6).

8. A transfer chain as in Claim 1, characterized in that barriers (13) are provided upstream of at least certain of the work stations in order that that portion (5A) of the interval (5) between stations, which lies between the points (10) for crossing over onto the transfer chain (1) and the first work station following, serves for individual between-stations storage.

9. A transfer chain as in Claim 1, characterized in that means of identification are carried by each pallet (8) and indicate at any time the next work station at which this pallet will have to stop.

10. A transfer chain as in either of the Claims 1, 2, characterized in that an output chain (8) and an input chain (9) are arranged between firstly the transfer chain (1) respectively downstream of the unloading station (3) and upsteam of the loading station (2) and secondly the common dynamic storage chain (6).

*Fig. 1*

*Fig. 2*

*Fig.3*

*Fig.4*